# EUROPÄISCHE PATENTSCHRIFT

(11) **EP 3 841 445 B1**
(45) Veröffentlichungstag und Bekanntmachung des Hinweises auf die Patenterteilung: **06.07.2022**
(21) Anmeldenummer: 19758681.1
(22) Anmeldetag: 21.08.2019
(51) Int. Cl.: G05D 1/02, B60B 19/00, B60B 19/12, B62D 63/02

(54) **VERFAHREN ZUM BETREIBEN EINES OMNIDIREKTIONALRÄDER-FAHRZEUGS, OMNIDIREKTIONALRÄDER-FAHRZEUG UND COMPUTERPROGRAMMPRODUKT**
METHOD FOR OPERATING AN OMNIDIRECTIONAL WHEEL VEHICLE, OMNIDIRECTIONAL WHEEL VEHICLE, AND COMPUTER PROGRAM PRODUCT
PROCÉDÉ POUR FAIRE FONCTIONNER UN VÉHICULE À ROUES OMNIDIRECTIONNELLES, VÉHICULE À ROUES OMNIDIRECTIONNELLES ET PRODUIT DE PROGRAMME INFORMATIQUE

(30) Priorität: 24.08.2018 DE 102018214381
(43) Veröffentlichungstag der Anmeldung: 30.06.2021
(73) Patentinhaber: KUKA Deutschland GmbH, 86165 Augsburg (DE)
(72) Erfinder: BRAUN, Daniel, 86356 Neusäß (DE)
(74) Vertreter: Oelke, Jochen
(86) Internationale Anmeldenummer: PCT/EP2019/072330
(87) Internationale Veröffentlichungsnummer: WO 2020/038977

(56) Entgegenhaltungen:
- EP-A2- 2 361 856
- US-A- 4 143 756
- US-A1- 2018 170 678

## Beschreibung

Die Erfindung betrifft ein Verfahren zum Betreiben eines Omnidirektionalräder-Fahrzeugs, das einen Fahrzeugkörper aufweist, an dem wenigstens vier antreibbare, omnidirektionale Räder drehbar gelagert sind, wobei jedes der wenigstens vier Räder zum Fortbewegen des Omnidirektionalräder-Fahrzeugs auf einem Untergrund ausgebildet und durch eine Steuervorrichtung individuell in ihren Drehrichtungen und Drehgeschwindigkeiten angesteuert sind. Die Erfindung betrifft außerdem ein zugehöriges Omnidirektionalräder-Fahrzeug und ein zugehöriges Computerprogrammprodukt.

Aus der WO 2008/122538 A1 ist ein omnidirektionales Fahrzeug bekannt, das omnidirektionale Räder und einen Fahrzeugkörper aufweist, an dem wenigstens eines der omnidirektionalen Räder mittels einer Einzelradaufhängung befestigt ist.

Aus der EP 2 361 856 A2 ist eine Förderbahn zum Fördern eines Stückguts längs einer Förderstrecke bekannt. Die Förderbahn weist wenigstens ein Mecanumrad auf.

Aus der US 2018/170678 A1 ist eine Plattform für eine omnidirektionale Bewegung bekannt, welche einen ersten und zweiten beweglichen Teil mit Nuten aufweisen, wobei die ersten und zweiten beweglichen Teile getrennt voneinander bewegt werden können.

Aus der US 4 143 756 A ist eine Förderbahnorientierungseinheit bekannt, mittels derer ein zu fördernder Artikel auf einem Förderband gedreht werden kann und zwar durch nebeneinander in einem Winkel angeordnete antreibbare Rollen.

Aufgabe der Erfindung ist es, ein Verfahren zu schaffen, mit dem ein Omnidirektionalräder-Fahrzeug, das einen Fahrzeugkörper aufweist, an dem wenigstens vier antreibbare, omnidirektionale Räder drehbar gelagert sind, wobei jedes der wenigstens vier Räder zum Fortbewegen des Omnidirektionalräder-Fahrzeugs auf einem Untergrund ausgebildet ist, durch eine Steuervorrichtung zum Antreiben der Räder besonders flexibel und mit hoher Fahrpräzision angesteuert werden können. Insbesondere soll eine hohe Fahrpräzision auch dann erreicht werden, wenn das Omnidirektionalräder-Fahrzeug von einem ersten Untergrund auf einen zweiten Untergrund wechselt, wobei eine Relativbewegung zwischen dem ersten Untergrund und dem zweiten Untergrund besteht.

Diese Aufgabe wird erfindungsgemäß gelöst durch ein Verfahren zum Betreiben eines Omnidirektionalräder-Fahrzeugs, das einen Fahrzeugkörper aufweist, an dem wenigstens vier antreibbare, omnidirektionale Räder drehbar gelagert sind, wobei jedes der wenigstens vier Räder zum Fortbewegen des Omnidirektionalräder-Fahrzeugs auf einem Untergrund ausgebildet und durch eine Steuervorrichtung individuell in ihren Drehrichtungen und Drehgeschwindigkeiten angesteuert sind, gekennzeichnet durch die folgenden Schritte:
- Fahren des Omnidirektionalräder-Fahrzeugs mit allen der wenigstens vier Rädern auf einem ersten Untergrund durch Ansteuern aller der wenigstens vier Räder mittels der Steuervorrichtung in aufeinander abgestimmten Drehrichtungen und Drehgeschwindigkeiten aller wenigstens vier Räder, derart, dass sich das Omnidirektionalräder-Fahrzeug einem zweiten Untergrund annähern, welcher zweite Untergrund sich relativ zum ersten Untergrund mit einer Differenzgeschwindigkeit zum ersten Untergrund bewegt,
- Abschalten des angesteuerten Antreibens mindestens eines der wenigstens vier Räder, jedoch höchstens so vieler Räder, dass zumindest drei der wenigstens vier Räder auf dem ersten Untergrund verbleiben, wobei das wenigstens eine abgeschaltete Rad durch angesteuertes Antreiben der übrigen Räder auf den zweiten Untergrund aufgefahren wird,
- freies Drehen des wenigstens einen auf den zweiten Untergrund aufgefahrenen Rades, derart, dass es eine Drehrichtung und Drehgeschwindigkeit annimmt, die sich aufgrund der relativen Bewegung des zweiten Untergrunds bezüglich des ersten Untergrunds in Abhängigkeit der Differenzgeschwindigkeit einstellt,
- Erfassen der Drehrichtung und der Drehgeschwindigkeit des wenigstens einen auf den zweiten Untergrund aufgefahrenen Rades während seines freien Drehens auf dem zweiten Untergrund, und
- Fahren des Omnidirektionalräder-Fahrzeugs mit den wenigstens vier Rädern teilweise auf dem ersten Untergrund und teilweise auf dem zweiten Untergrund durch antreibbares Ansteuern aller der wenigstens vier Räder mittels der Steuervorrichtung in aufeinander abgestimmten Drehrichtungen und Drehgeschwindigkeiten aller wenigstens vier Räder in Abhängigkeit der während des freien Drehens im abgeschalteten, nichtangetriebenen Zustand erfassten Drehrichtung und Drehgeschwindigkeit des wenigstens einen auf den zweiten Untergrund aufgefahrenen Rades.

Die Räder sind sogenannte Omnidirektional-Räder und können insbesondere eine Radnabe aufweisen, die um eine Rotationsachse drehbar ist, wobei zwei mit der Radnabe verbundene Radscheiben koaxial zur Radnabe angeordnet sind und eine Anzahl von balligen Rollkörpern vorgesehen sind, die zwischen den Radscheiben angeordnet, gleichmäßig entlang eines Umfangsmantels des Rades verteilt und mit ihren Rollachsen in einem Diagonalwinkel zur Rotationsachse der Radnabe ausgerichtet sind. An ihren gegenüberliegenden Enden sind die Rollkörper frei drehbar bezüglich der Radscheiben gelagert. Die Rollkörper können über zugeordnete Lager direkt an den Innenseiten der Radscheiben gelagert sein oder an separaten Aufnahmebauteilen gelagert sein, die an den Radscheiben befestigt sind.

Demgemäß können bei dem Omnidirektionalräder-Fahrzeug die Räder beispielsweise gemäß EP 2 176 075 A1 oder gemäß WO 2007/016917 A2 ausgebildet sein.

Das Omnidirektionalräder-Fahrzeug ist zum fahrerlosen Fahren ausgebildet. Dazu weist das Omnidirektionalräder-Fahrzeug eine Steuervorrichtung auf, die auch als Fahrsteuervorrichtung bezeichnet werden kann. Die Steuervorrichtung steuert und/oder regelt die Drehrichtungen und die Drehgeschwindigkeiten bzw. ggf. auch die Drehbeschleunigungen der angetriebenen Räder des Omnidirektionalräder-Fahrzeugs. Das Omnidirektionalräder-Fahrzeug kann neben den angetriebenen Rädern auch antriebslose Räder aufweisen, die ohne von der Steuervorrichtung angesteuert zu werden, nur drehbar am Fahrzeugkörper des Omnidirektionalräder-Fahrzeugs gelagert sind, ohne mit einer Antriebsvorrichtung verbunden zu sein. Das Omnidirektionalräder-Fahrzeug kann beispielsweise ein fahrerloses Transportsystem (FTS) sein.

Jedes angetriebene Rad kann eine Nabe oder eine Achse aufweisen, die mit einem Motor verbunden ist. Insoweit kann jedem einzelnen Rad ein eigener Motor zugeordnet sein. Die Steuervorrichtung treibt das jeweilige antreibbare Rad dadurch an, dass die Steuervorrichtung den jeweiligen Motor ansteuert und der jeweilige Motor das entsprechende Rad antreibt oder abbremst.

Die angetriebenen Räder sind regelmäßig um eine Radachse an dem Fahrzeugkörper, insbesondere an einem Fahrwerk des Fahrzeugkörpers drehbar gelagert. Die Räder sind dabei abgesehen von ihrer drehbaren Lagerung um die Radachse regelmäßig um keine sonstige Achse umorientierbar oder schwenkbar, d.h. die Räder sind nicht-lenkbare Räder. Um das Omnidirektionalräder-Fahrzeug dennoch navigieren und insbesondere um seine Gierachse drehen zu können, werden die omnidirektionalen Räder mit unterschiedlichen Drehgeschwindigkeiten betrieben. In Abhängigkeit der Drehgeschwindigkeitsdifferenzen, die auch unterschiedliche Drehrichtungen umfassen können, eines Rades zu einem anderen Rad stellt sich eine resultierende Bewegung des Omnidirektionalräder-Fahrzeugs ein. Im speziellen kann das Omnidirektionalräder-Fahrzeug sich dann auch auf der Stelle um seine eigene Vertikalachse drehen bzw. wenden. Mit dem Omnidirektionalräder-Fahrzeug sind auch geradlinige Bewegungen in Richtung der Drehachsen der angetriebenen Räder, also ein seitliches Versetzen des Omnidirektionalräder-Fahrzeugs möglich.

Der Untergrund kann jeglicher Boden, jegliche Fahrbahn oder jegliche Einrichtung sein, auf der das Omnidirektionalräder-Fahrzeug sich mittels seiner angetriebenen Räder selbständig fortzubewegen vermag. Ein gegenüber der Umgebung sich bewegender Untergrund kann beispielsweise ein ebenerdiges Förderband in einer Fließbandfertigung einer Fabrik sein.

Ein aufeinander abgestimmtes Ansteuern der angetriebenen Räder durch die Steuervorrichtung bedeutet, dass die Steuervorrichtung die Motoren, an die jeweils ein angetriebenes Rad angeschlossen sind, hinsichtlich Ihrer Drehrichtung und Drehgeschwindigkeit bzw. Drehbeschleunigung steuert, so dass in Zusammenwirken aller angetriebenen omnidirektionalen Räder sich eine resultierende Bewegungsrichtung, Drehung und/oder Bewegungsgeschwindigkeit des gesamten Omnidirektionalräder-Fahrzeugs einstellt, um einen vorgegebenen Bewegungspfad automatisch abfahren zu können, und/oder sich selbststätig an einen bestimmten Ort hin navigieren zu können. Die Ansteuerung der Omnidirektionalräder kann vorzugsweise so koordiniert sein, dass alle Omnidirektionalräder sich in einem abrollenden, insbesondere schlupffreien Reibungseingriff mit dem Untergrund befinden.

Indem unter anderem ein Erfassen der Drehrichtung und der Drehgeschwindigkeit des wenigstens einen auf den zweiten Untergrund aufgefahrenen Rades während seines freien Drehens auf dem zweiten Untergrund stattfindet, kann das Omnidirektionalräder-Fahrzeug auch auf sich bewegende Untergründe hinaufbewegt werden und/oder über sich bewegende Untergründe hinwegbewegt werden, ohne dass von dem geplanten Bewegungspfad abgewichen wird. Die jeweilige Bewegungsgeschwindigkeit und/oder Bewegungsrichtung des sich bewegenden Untergrunds muss dabei einerseits nicht vorbekannt sein und kann sich andererseits auch während des Hinauffahrens, Hinabfahrens auf, oder eines Hinwegfahrens über den bewegten Untergrund ändern.

Da der Antrieb des auffahrenden Rades bereits einen wählbaren Zeitraum vor dem Auffahren auf einen anderen Untergrund abgeschaltet werden kann und auch die Erfassung der Differenzgeschwindigkeit des zweiten Untergrunds zum ersten Untergrund einen wählbaren Zeitraum später geschehen kann, muss auch der genaue Zeitpunkt und/oder Ort des Auffahrens während er Bewegung nicht bekannt sein.

Ein besonderer Vorteil ist, dass während sich noch alle Räder auf dem ersten Untergrund befinden, das wenigstens eine nicht angetriebene Rad lediglich durch die Geschwindigkeit des Fahrzeugs selbst über diesem ersten Untergrund bestimmt wird, und sobald das wenigstens eine nicht angetriebene Rad auf den neuen, zweiten Untergrund auffährt, erst dann die Differenzgeschwindigkeit hinzukommt. Es ist einer der Vorteile dieses Verfahrens, dass man den genauen Zeitpunkt und Ort des Auffahrens auf den neuen, zweiten Untergrund nicht kennen muss.

Die betrachteten Fördersysteme, die erfindungsgemäße Omnidirektionalräder-Fahrzeuge umfassen können, sind beispielsweise in der Fließfertigung folgendermaßen gekennzeichnet:
- Die zu fertigenden Produkte oder Teile davon werden vom Fördersystem kontinuierlich transportiert. Dabei können die Produkte auf der Fördereinrichtung selbst oder auf Trägersystemen stehen, welche fest mit der Fördereinrichtung verbunden sind. Es können auch mobile Trägersysteme verwendet werden, welche ihrerseits von der Fördereinrichtung transportiert werden.
- Alternativ können zu fertigende Produkte oder Teile auch von einem getrennten System befördert werden, welches allerdings eine Relativbewegung zwischen dem beweglichen Teil der Fördereinrichtung und den Produkten oder Teilen aufhebt, z.B. durch eine angeglichene Vortriebsgeschwindigkeit.
- Die Fördereinrichtung kann relativ zur Umgebung bewegliche Oberflächen aufweisen, die zumindest stückweise ebenerdig mit der Umgebung abschließen.
- Die Fördereinrichtung kann so ausgeführt sein, dass ein Werker oder andere Hilfsmittel und weitere Systeme parallel mit den zu fertigenden Produkten mitgefördert werden können.
- Beispiele sind Produktionsanlagen in der Automobilindustrie, in denen die Fahrzeuge während der Fertigung auf einem Fließband stehen, welches von Werkern betreten werden kann, um Fertigungsschritte ohne Relativbewegung zu den Fahrzeugen ausführen zu können.

Problematisch ist unter anderem das Fahren des Omnidirektionalräder-Fahrzeugs auf eine sich bewegende Fördereinrichtung hinauf und/oder von einer Fördereinrichtung herunter. Dies kann auch kombiniert auftreten, wenn beispielsweise die Größe des Omnidirektionalräder-Fahrzeugs die Breite der Fördereinrichtung übertrifft, z.B. ein langes Omnidirektionalräder-Fahrzeug ein schmales Fließband überfährt. Das Problem tritt immer dann auf, wenn ein angetriebenes Rad oder mehrere angetriebene Räder des Omnidirektionalräder-Fahrzeugs auf den bewegten Untergrund, d.h. die Fördereinrichtung hinauffährt oder von diesem herunterfährt.

Wenn das Omnidirektionalräder-Fahrzeug vollständig auf feststehendem Grund fährt, unterstützen alle angetriebenen Räder die gewünschte Bewegung. Beim Auffahren eines ersten Rads auf die sich bewegende Fördereinrichtung erfährt dieses Rad jedoch eine zusätzliche Relativbewegung. In der Folge müsste dieses Rad am richtigen Ort, zur richtigen Zeit mit sehr hoher Regelgüte auf die Geschwindigkeit und Bewegungsrichtung auf die Relativbewegung der Fördereinrichtung synchronisiert werden, da sonst entweder das Omnidirektionalräder-Fahrzeug von der Fördereinrichtung mitgeschleift wird oder das Rad auf der Fördereinrichtung schleift.

Das erfindungsgemäße Verfahren für das Auffahren, Überfahren und/oder Herunterfahren von Fließbändern mit omnidirektionalen Fahrzeugen wird im Folgenden am Beispiel eines Omnidirektionalräder-Fahrzeugs mit vier Rädern beschrieben, die alle vier angetrieben sind. Eine Übertragung auf komplexere Systeme, die mehr als vier Räder aufweisen, ist ohne weiteres möglich. Angetriebene Räder solcher Fahrzeuge können analog behandelt werden, nicht angetriebene Räder spielen für das Verfahren keine Rolle und können daher ignoriert werden.

Das Verfahren gliedert sich im Wesentlichen in die folgenden Schritte:
- Das Omnidirektionalräder-Fahrzeug bewegt sich in Richtung des aktiven Fördersystems und nimmt eine günstige Ausrichtung in Bezug auf das Fördersystem ein. Eine günstige Ausrichtung kann so aussehen, dass bei einer Bewegung des Omnidirektionalräder-Fahrzeugs auf das Fördersystem immer nur ein Rad von der Umgebung aus auf das Fördersystem auffährt.
- Das Rad, welches als nächstes auf das Fördersystem auffährt, wird ab jetzt weder aktiv angetrieben oder gebremst und ist daher frei beweglich. Mit den restlichen Rädern wird nun das Omnidirektionalräder-Fahrzeug weiter in die geplante Richtung bewegt. Dabei fährt nun ein Rad auf das Fördersystem auf und wird dort durch die bestehende Relativbewegung des Fördersystems mitgenommen, die Beschleunigung des Rads geschieht dabei allein durch das Fördersystem.
- Am gerade aufgefahrenen Rad wird die aktuelle Drehgeschwindigkeit gemessen und ab nun wieder aktiv mit dem Radantrieb eingeregelt. Dabei bleibt das Omnidirektionalräder-Fahrzeug auf dem gewählten Kurs in Bezug auf das Relativsystem der Umgebung und alle Räder bleiben im Eingriff mit ihrer jeweiligen Umgebung. Die Differenz der nun eingeregelten Geschwindigkeit des Rades mit der vorherigen Geschwindigkeit kann ab nun als Ausgleichswert für dieses Rad verwendet werden.

Falls gewünscht, kann eine neue Orientierung für das Omnidirektionalräder-Fahrzeug gewählt werden, um das nächste Rad auf das Fördersystem zu bewegen.

Das Omnidirektionalräder-Fahrzeug befindet sich am Ende vollständig auf dem Fördersystem. Alle Ausgleichswerte können nun verworfen werden und das Omnidirektionalräder-Fahrzeug bewegt sich auf dem Fördersystem wie auf einer feststehenden Umgebung.

Alle beschriebenen Schritte können analog für ein Fahren des Omnidirektionalräder-Fahrzeugs vom Fördersystem herunter verwendet werden. Dies ist lediglich ein Wechsel des Bezugsystems. Des Weiteren kann auch durch eine parallele Kombination von Auf- und Abfahren das Überfahren eines Fördersystems durch ein Omnidirektionalräder-Fahrzeug modelliert werden.

Die Einschränkung, dass immer nur ein Rad zwischen fester Umgebung und bewegtem Fördersystem wechseln sollte, gilt so nur für vierrädrige Omnidirektionalräder-Fahrzeuge, wie beschrieben. Für Fahrzeuge mit mehr als vier angetriebenen omnidirektionalen Rädern reicht es aus, wenn stets mindestens drei Räder während einem Vorgang des Verfahrens in der festen Umgebung, bzw. auf dem bewegten Fördersystem verbleiben. Dies ist damit begründet, dass mindestens drei Räder benötigt werden, um die Position und Orientierung des Gesamtsystems eindeutig zu bestimmen. Ein nicht angetriebenes Rad kann wie eine in Bezug auf die Richtung frei bewegliche Lastrolle betrachtet werden.

Das erfindungsgemäße Verfahren ermöglicht es also, omnidirektionalen fahrerlosen Transportsystemen (FTS) mit omnidirektionalen Rädern ein geregeltes Auffahren auf und Abfahren von bewegten Fördersystemen zu ermöglichen. Dabei kann ein Mitschleppen des Omnidirektionalräder-Fahrzeugs durch das Fördersystem oder ein Schleifen von Rädern des Omnidirektionalräder-Fahrzeugs auf dem Untergrund der Umgebung vermieden werden.

Das Verfahren benötigt keine hochgenaue Lokalisierung des Omnidirektionalräder-Fahrzeugs und keine genaue Kenntnis der Geschwindigkeiten des Omnidirektionalräder-Fahrzeugs oder des Fördersystems d.h. des Untergrunds gegenüber der Umgebung als Bezugsystem. Die aktive Beschleunigungsfähigkeit jedes einzelnen Rads kann so gewählt werden, dass eine Beschleunigung des Omnidirektionalräder-Fahrzeugs auf festem Untergrund passend für den Einsatz des Fahrzeugs ausgebildet ist.

Bei dem Verfahren kann ein Erfassen der Orientierung des Omnidirektionalräder-Fahrzeugs bezüglich der relativen Bewegungsrichtung von zweitem Untergrund zu erstem Untergrund und ein Fahren des Omnidirektionalräder-Fahrzeugs mit den wenigstens vier Rädern teilweise auf dem ersten Untergrund und teilweise auf dem zweiten Untergrund durch antreibbares Ansteuern aller der wenigstens vier Räder mittels der Steuervorrichtung in aufeinander abgestimmten Drehrichtungen und Drehgeschwindigkeiten aller wenigstens vier Räder in Abhängigkeit der erfassten Orientierung des Omnidirektionalräder-Fahrzeugs bezüglich der relativen Bewegungsrichtung von zweitem Untergrund zu erstem Untergrund erfolgen.

Generell kann entweder nur ein einziges Rad antriebslos geschaltet werden und nur dieses einzige Rad wechselt zu einem bestimmten Zeitpunkt von dem einen Untergrund auf den anderen Untergrund, oder es können zwei bzw. mehrere Räder gleichzeitig antriebslos geschalten werden und diese zwei oder mehreren Räder wechseln gleichzeitig oder nacheinander von dem einen Untergrund auf den anderen Untergrund. Dies richtet sich im Wesentlichen nach der jeweiligen Räderanordnung an dem Omnidirektionalräder-Fahrzeug und an dem Auffahrwinkel bzw. Abfahrwinkel von einem Untergrund zum anderen Untergrund. Es ist lediglich sicherzustellen, dass mindestens drei Räder verbleiben, die angetrieben angesteuert werden, um das Fahrzeug eindeutig d.h. bestimmt manövrieren zu können.

Bei dem Verfahren kann vorgesehen sein, dass während des abgeschalteten Zustands des angesteuerten Antreibens der auf den zweiten Untergrund auffahrenden Räder, derart, dass die auf den zweiten Untergrund auffahrenden Räder sich derart frei drehen können, dass sie eine Drehrichtung und Drehgeschwindigkeit annehmen, die sich aufgrund der relativen Bewegung des zweiten Untergrunds bezüglich des ersten Untergrunds in Abhängigkeit der Differenzgeschwindigkeit einstellt, die auf den zweiten Untergrund auffahrenden Räder von der Steuervorrichtung weder gebremst noch angetrieben werden.

Bei dem Verfahren kann während des abgeschalteten Zustands des angesteuerten Antreibens der auf den zweiten Untergrund auffahrenden Räder, derart, dass die auf den zweiten Untergrund auffahrenden Räder sich derart frei drehen können, dass sie eine Drehrichtung und Drehgeschwindigkeit annehmen, die sich aufgrund der relativen Bewegung des zweiten Untergrunds bezüglich des ersten Untergrunds in Abhängigkeit der Differenzgeschwindigkeit einstellt, ein Beschleunigen oder Verlangsamen der Drehungen der Räder auf dem zweiten Untergrund alleine durch die relative Bewegung des zweiten Untergrunds zum ersten Untergrund erfolgt, insbesondere ohne ein gesteuertes Antreiben oder Abbremsen durch die Steuervorrichtung erfolgt.

Bei dem Verfahren kann ein Fahren des Omnidirektionalräder-Fahrzeugs mit den wenigstens vier Rädern teilweise auf dem ersten Untergrund und teilweise auf dem zweiten Untergrund durch ein angetriebenes Ansteuern ausschließlich der auf dem ersten Untergrund verbliebenen Räder mittels der Steuervorrichtung in aufeinander abgestimmten Drehrichtungen und Drehgeschwindigkeiten dieser verbliebenen Räder erfolgt, insbesondere während des Erfassens der Drehrichtung und der Drehgeschwindigkeit des wenigstens einen auf den zweiten Untergrund aufgefahrenen Rades während seines freien Drehens auf dem zweiten Untergrund erfolgen.

Bei dem Verfahren kann nach dem Erfassen der Drehrichtung und der Drehgeschwindigkeit des wenigstens einen auf den zweiten Untergrund aufgefahrenen Rades während seines freien Drehens auf dem zweiten Untergrund ein Einregeln der Drehrichtung und der Drehgeschwindigkeit derjenigen Räder auf dem zweiten Untergrund mittels der Steuervorrichtung derart erfolgen, dass das Fahrzeug seine derzeitige oder geplante Orientierung, Bewegungsrichtung, Bewegungsgeschwindigkeit und/oder Beschleunigung beibehält.

Bei dem Verfahren kann das Fahren des Omnidirektionalräder-Fahrzeugs von dem ersten Untergrund auf den zweiten Untergrund ein Auffahren des Omnidirektionalräder-Fahrzeugs von einem bezüglich der Umgebung ortsfesten ersten Untergrund auf einen bewegten zweiten Untergrund sein.

Bei dem Verfahren kann das Fahren des Omnidirektionalräder-Fahrzeugs von dem ersten Untergrund auf den zweiten Untergrund ein Herunterfahren des Omnidirektionalräder-Fahrzeugs von einem bezüglich der Umgebung bewegten ersten Untergrund auf einen ortsfesten zweiten Untergrund sein.

Bei dem Verfahren kann das Fahren des Omnidirektionalräder-Fahrzeugs gleichzeitig sowohl ein Auffahren des Omnidirektionalräder-Fahrzeugs von einem bezüglich der Umgebung ortsfesten ersten Untergrund auf einen bewegten zweiten Untergrund, als auch ein Herunterfahren des Omnidirektionalräder-Fahrzeugs von einem bezüglich der Umgebung bewegten zweiten Untergrund auf einen ortsfesten dritten Untergrund umfassen.

Bei dem Verfahren kann während eines Auffahren des Omnidirektionalräder-Fahrzeugs von einem bezüglich der Umgebung ortsfesten ersten Untergrund auf einen bewegten zweiten Untergrund, oder eines Herunterfahren des Omnidirektionalräder-Fahrzeugs von einem bezüglich der Umgebung bewegten zweiten Untergrund auf einen ortsfesten dritten Untergrund entweder immer nur ein einzelnes Rad zeitlich nach einem anderen Rad in einen abgeschalteten Zustand gebracht werden oder mehrere Räder in den abgeschalteten Zustand gebracht werden, wobei stets zumindest drei Räder angetrieben bleiben und das jeweils abgeschaltete Rad sich derart frei drehen kann, dass es nach einem Auffahren oder Herunterfahren eine Drehrichtung und Drehgeschwindigkeit annimmt, die sich aufgrund der relativen Bewegung des einen Untergrunds bezüglich des anderen Untergrunds in Abhängigkeit der Differenzgeschwindigkeit einstellt. Insoweit können zum selben Zeitpunkt mehrere Räder gleichzeitig abgeschaltet sein, wobei lediglich sicherzustellen ist, dass wenigstens drei Räder angetrieben bleiben, um das Omnidirektionalräder-Fahrzeug eindeutig bestimmt fahren bzw. navigieren zu können. Die wenigstens drei angetriebenen Räder können sich auf demselben Untergrund befinden. Es ist jedoch nicht zwingend notwendig, dass diese wenigstens drei angetriebenen Räder sich auf demselben Untergrund befinden. Es kann auch sein, dass ein oder zwei der angetriebenen Räder sich auf dem einen Untergrund befinden und das jeweils ergänzende Rad oder die wenigstens zwei ergänzenden Räder sich auf dem anderen Untergrund befinden.

Die Steuervorrichtung kann eingerichtet sein, während eines Auffahren des Omnidirektionalräder-Fahrzeugs von einem bezüglich der Umgebung ortsfesten ersten Untergrund auf einen bewegten zweiten Untergrund, oder eines Herunterfahren des Omnidirektionalräder-Fahrzeugs von einem bezüglich der Umgebung bewegten zweiten Untergrund auf einen ortsfesten dritten Untergrund die Orientierung des Omnidirektionalräder-Fahrzeugs zu ändern.

Die Steuervorrichtung kann eingerichtet sein, das Omnidirektionalräder-Fahrzeug während eines Auffahren von einem bezüglich der Umgebung ortsfesten ersten Untergrund auf einen bewegten zweiten Untergrund, und/oder während eines Herunterfahren von einem bezüglich der Umgebung bewegten zweiten Untergrund auf einen ortsfesten dritten Untergrund, in eine Orientierung zu bringen, in der das wenigstens eine antriebslos geschaltete Rad mit seiner Drehachse genau oder möglichst annähernd senkrecht zur relativen Bewegungsrichtung ausgerichtet ist, in die sich der zweite Untergrund relativ zum ersten Untergrund oder dritten Untergrund mit seiner Differenzgeschwindigkeit zum ersten Untergrund oder dritten Untergrund bewegt.

Die Aufgabe der Erfindung wird auch gelöst durch ein Omnidirektionalräder-Fahrzeug, aufweisend einen Fahrzeugkörper, wenigstens vier, an dem Fahrzeugkörper drehbar gelagerte, antreibbare omnidirektionale Räder, wobei jedes der wenigstens vier Räder zum Fortbewegen des Omnidirektionalräder-Fahrzeugs auf einem Untergrund ausgebildet sind, und eine Steuervorrichtung zum individuellen Ansteuern der wenigstens vier Räder in ihren Drehrichtungen und Drehgeschwindigkeiten, wobei die Steuervorrichtung ausgebildet ist, ein Verfahren nach einem oder mehreren der beschriebenen Ausführungsweisen durchzuführen.

Die Aufgabe der Erfindung wird außerdem gelöst durch ein Computerprogrammprodukt aufweisend einen maschinenlesbaren Träger, auf dem Programmcode gespeichert ist, der von einer Fahrsteuervorrichtung des Omnidirektionalräder-Fahrzeugs auslesbar ist und der die Fahrsteuervorrichtung des Omnidirektionalräder-Fahrzeugs ausbildet und/oder einrichtet, ein Verfahren nach einem oder mehreren der beschriebenen Ausführungsweisen durchzuführen, wenn der Programmcode von der Fahrsteuervorrichtung des Omnidirektionalräder-Fahrzeugs ausgeführt wird.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1 bis 8: eine schematische Sequenz eines Auffahrens eines Omnidirektionalräder-Fahrzeugs von einem ortsfesten Untergrund auf eine sich in Pfeilrichtung bewegende Förderbahn nach dem erfindungsgemäßen Verfahren; und
- Fig. 9 bis 12: eine schematische Sequenz eines Herunterfahrens des Omnidirektionalräder-Fahrzeugs von der sich in Pfeilrichtung bewegenden Förderbahn auf einen ortsfesten Untergrund nach dem erfindungsgemäßen Verfahren.

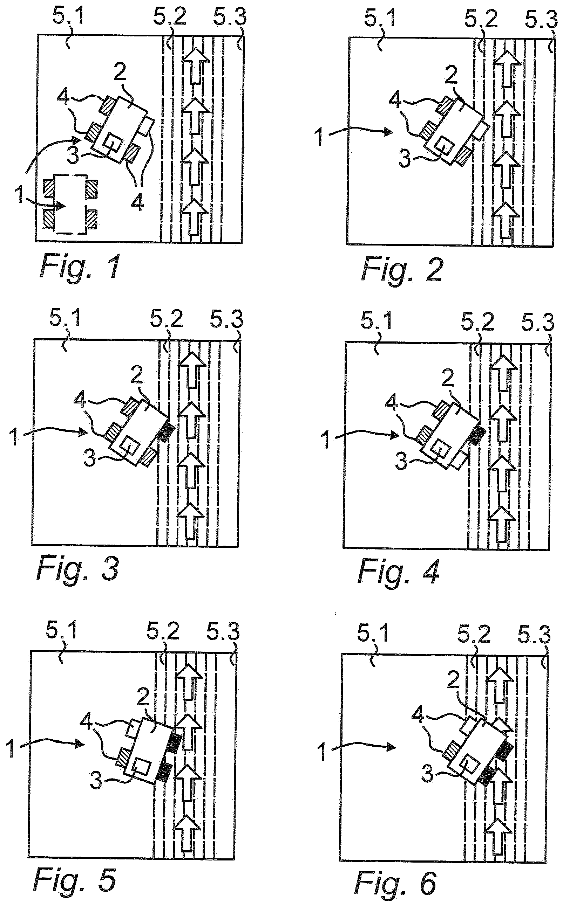

Die Darstellungen der Fig. 1 bis Fig. 12 zeigen jeweils ein Omnidirektionalräder-Fahrzeug 1, aufweisend einen Fahrzeugkörper 2, mit daran drehbar gelagerten, im Falle des vorliegenden Ausführungsbeispiels vier antreibbaren, omnidirektionalen Rädern 4, wobei jedes der vier Räder 4 zum Fortbewegen des Omnidirektionalräder-Fahrzeugs 1 auf einem Untergrund 5.1, 5.2, 5.3 ausgebildet ist. Das Omnidirektionalräder-Fahrzeug 1 weist außerdem eine Steuervorrichtung 3 auf zum individuellen Ansteuern der vier Räder 4 in ihren Drehrichtungen und Drehgeschwindigkeiten. Die Steuervorrichtung 3 ist ausgebildet, eines oder mehrere der erfindungsgemäßen Verfahren auszuführen.

Im Folgenden wird das Verfahren anhand eines Omnidirektional-räder-Fahrzeugs 1 mit vier angetriebenen omnidirektionalen Rädern 4 beschrieben. Alle hierzu erwähnten Beschreibungen sind im selben Sinne auch für Omnidirektionalräder-Fahrzeuge 1 mit mehr als vier angetriebenen omnidirektionalen Rädern 4 anwendbar. Unabhängig davon, wie viele angetriebenen omnidirektionale Räder 4 das Omnidirektionalräder-Fahrzeug 1 aufweist, besteht die Grundanforderung, dass stets mindestens drei Räder 4 von der Steuervorrichtung 3 in einem kontrollierendem, angetriebenen oder abbremsenden Zustand sein müssen, damit die Position und die Orientierung des Omnidirektional-räder-Fahrzeugs 1 bestimmt ist. Damit mindestens ein einzelnes Rad 4 antriebslos geschaltet werden kann und dennoch das Omnidirektionalräder-Fahrzeug 1 in einem kontrollieren Zustand bleibt, muss das Omnidirektionalräder-Fahrzeug 1 also mindestens vier Räder 4 aufweisen. Im Folgenden wird deshalb die insoweit einfachste Ausführungsform beschrieben. Das erfindungsgemäße Verfahren betrifft angetriebene Räder 4 und ist deshalb unabhängig davon, ob das Omnidirektionalräder-Fahrzeug 1 ggf. ein oder mehrere nicht angetriebene Zusatzräder aufweist. Die Zusatzräder können beispielsweise dann zweckmäßig sein, wenn eine hohe Traglast des Omnidirektional-räder-Fahrzeugs 1 erreicht werden soll, d.h. die Traglast auf möglichst viele Räder verteilt werden soll, aber nur eine geringere Anzahl von Rädern 4 angetrieben ausgebildet sein müssen, um das Omnidirektionalräder-Fahrzeug 1 fortbewegen zu können.

Gemäß einem grundliegenden Verfahren erfolgt, wie in Fig. 1 aufgezeigt, zunächst ein Fahren des Omnidirektionalräder-Fahrzeugs 1 mit allen vier angetriebenen Rädern 4 auf einem ersten Untergrund 5.1 durch Ansteuern aller vier Räder 4 mittels der Steuervorrichtung 3 in aufeinander abgestimmten Drehrichtungen und Drehgeschwindigkeiten aller vier Räder 4. Der erste Untergrund 5.1 ist im Falle des vorliegenden Ausführungsbeispiels ortsfest, d.h. stillstehend bezüglich der Umgebung. Ein zweiter Untergrund 5.2 weist relativ zum ersten Untergrund 5.1 eine Bewegungsgeschwindigkeit auf, die durch die Pfeile angedeutet ist. Der zweite Untergrund 5.2 kann beispielsweise ein ebenerdiges Förderband in einer Serienproduktionslinie einer Fabrik sein.

In Fig.1 nähert sich das Omnidirektionalräder-Fahrzeug 1 also dem zweiten Untergrund 5.2 an, welcher zweite Untergrund 5.2 sich relativ zum ersten Untergrund 5.1 mit einer Differenzgeschwindigkeit zum ersten Untergrund 5.1 bewegt. Das Omnidirektionalräder-Fahrzeug 1 soll möglichst unbeeinflusst durch die Bewegung des zweiten Untergrunds 5.2 über den sich bewegenden zweiten Untergrund 5.2 hinwegfahren, ohne dass von dem geplanten Pfad ungewollt abgewichen wird. Die tatsächliche Bewegungsgeschwindigkeit des zweiten Untergrunds 5.2 ist der Steuervorrichtung 3 des Omnidirektionalräder-Fahrzeugs 1 zunächst unbekannt.

Wenn alle vier Räder 4 sich noch auf dem ersten Untergrund 5.1 befinden, erfolgt ein automatisches Fahren des Omnidirektionalräder-Fahrzeugs 1 mittels der Steuervorrichtung 3 durch ein angetriebenes Ansteuern aller vier Räder 4 in aufeinander abgestimmten Drehrichtungen und Drehgeschwindigkeiten. Alle vier Räder fahren demgemäß bezüglich eines gemeinsamen Bezugsystems, nämlich dem ersten Untergrund 5.1. Diese Räder 4 sind in ihren angetriebenen Zuständen alle schraffiert dargestellt.

Wenn das Omnidirektionalräder-Fahrzeug 1 auf den zweiten Untergrund 5.2 auffährt, wie dies in Fig. 2 dargestellt ist, erfolgt zunächst ein Ansteuern aller vier Räder 4 mittels der Steuervorrichtung 3 derart, dass eines der vier Räder 4, also höchstens so viele Räder 4 auf den zweiten Untergrund 5.2 auffahren, dass zumindest drei Räder 4 auf dem ersten Untergrund 5.1 verbleiben. Bereits im Zustand der Fig. 1 erfolgt ein Abschalten des angesteuerten Antreibens des auf den zweiten Untergrund 5.2 aufzufahrenden Rades 4, derart, dass das auf den zweiten Untergrund 5.2 aufzufahrende Rad 4 sich derart frei drehen kann, dass es schon während des anschließenden Auffahrens und auch nach dem Auffahren eine Drehrichtung und Drehgeschwindigkeit annimmt, die sich aufgrund der relativen Bewegung des zweiten Untergrunds 5.2 bezüglich des ersten Untergrunds 5.1 in Abhängigkeit der Differenzgeschwindigkeit einstellt. Ein solches Abschalten des Antriebs ist in Fig.2 dadurch aufgezeigt, dass das betreffende Rad 4 unschraffiert, d.h. in weiß dargestellt ist.

Mittels des nicht angetriebenen, d.h. unschraffiert dargestellten Rades 4 erfolgt ein Erfassen der Drehrichtung und der Drehgeschwindigkeit dieses auf den zweiten Untergrund 5.2 aufgefahrenen Rades 4 während seines freien Drehens auf dem zweiten Untergrund 5.2. Das frei drehende Rad 4 gemäß Fig. 2 wird durch den sich bewegenden zweiten Untergrund 5.2 entsprechend beschleunigt oder abgebremst, bis dieses Rad 4 eine Drehrichtung und Drehgeschwindigkeit angenommen hat, die der Bewegung des zweiten Untergrund 5.2 entspricht. Die sich derart eingestellte Drehrichtung und Drehgeschwindigkeit dieses Rades 4 kann von der Steuervorrichtung 3 erfasst und ausgewertet werden. Das betreffende Rad bildet insoweit dann eine Messvorrichtung mittels der die Steuervorrichtung 3 die Bewegungsrichtung und die Bewegungsgeschwindigkeit des zweiten Untergrunds 5.2 feststellen kann. Die Steuervorrichtung 3 kann dann mittels der erfassten und/oder bestimmten Werte für Drehrichtung und Drehgeschwindigkeit des Rades 4 auch dieses Rad 4 angepasst angetrieben ansteuern, obwohl sich dieses eine Rad 4 auf einem anderen Untergrund, d.h. dem bewegten zweiten Untergrund 5.2 befindet.

Das derart angepasst angetriebene Rad 4 auf dem zweiten Untergrund 5.2 ist in Fig. 3 deshalb in schwarz dargestellt. Dies bedeutet, dass dieses Rad sich nicht mehr in einem antriebslosen Zustand befindet, sondern unter Berücksichtigung der Bewegungsrichtung und der Bewegungsgeschwindigkeit des zweiten Untergrunds 5.2 von der Steuervorrichtung 3 angetrieben angesteuert wird.

In Fig. 3 erfolgt somit ein Fahren des Omnidirektionalräder-Fahrzeugs 1 mit drei Rädern 4 auf dem ersten Untergrund 5.1 und einem Rad 4 auf dem zweiten Untergrund 5.2 durch angetriebenes Ansteuern aller vier Räder 4 mittels der Steuervorrichtung 3 in aufeinander abgestimmten Drehrichtungen und Drehgeschwindigkeiten aller vier Räder 4 in Abhängigkeit der während des freien Drehens im abgeschalteten, nichtangetriebenen Zustand erfassten Drehrichtung und Drehgeschwindigkeit des einen, auf den zweiten Untergrund 5.2 aufgefahrenen Rades 4, das in Fig. 3 schwarz dargestellt ist. In dem Zustand gemäß Fig. 3 erfolgt ein Fahren des Omnidirektionalräder-Fahrzeugs 1 mit drei Rädern 4 auf dem ersten Untergrund 5.1 und einem einzigen Rad 4 auf dem zweiten Untergrund 5.2 durch ein angetriebenes Ansteuern ausschließlich der auf dem ersten Untergrund 5.1 verbliebenen drei Räder 4 mittels der Steuervorrichtung 3 in aufeinander abgestimmten Drehrichtungen und Drehgeschwindigkeiten dieser verbliebenen drei Räder 4.

In Fig. 4 ist aufgezeigt, wie das beschriebene Verfahren mit dem zweiten auffahrenden Rad 4 wiederholt wird. Das zweite auffahrende Rad 4 ist in Fig. 4 unschraffiert, d.h. in weiß dargestellt. Das auf den zweiten Untergrund 5.2 aufgefahrene zweite Rad 4 kann sich derart frei drehen, dass es eine Drehrichtung und Drehgeschwindigkeit annimmt, die sich aufgrund der relativen Bewegung des zweiten Untergrunds 5.2 bezüglich des ersten Untergrunds 5.1 in Abhängigkeit der Differenzgeschwindigkeit einstellt. Ein solches Abschalten des Antriebs ist in Fig. 4 dadurch aufgezeigt, dass das betreffende Rad 4 unschraffiert, d.h. in weiß dargestellt ist.

In Fig. 5 erfolgt dann wiederum ein Fahren des Omnidirektionalräder-Fahrzeugs 1 mit zwei Rädern 4 auf dem ersten Untergrund 5.1 und zwei Rädern 4 auf dem zweiten Untergrund 5.2 durch angetriebenes Ansteuern aller vier Räder 4 mittels der Steuervorrichtung 3 in aufeinander abgestimmten Drehrichtungen und Drehgeschwindigkeiten aller vier Räder 4 in Abhängigkeit der während des freien Drehens im abgeschalteten, nichtangetriebenen Zustand erfassten Drehrichtung und Drehgeschwindigkeit der beiden, auf den zweiten Untergrund 5.2 aufgefahrenen Räder 4, die in Fig. 5 beide schwarz dargestellt sind.

In dem Zustand gemäß Fig. 6 erfolgt ein Fahren des Omnidirektionalräder-Fahrzeugs 1 mit lediglich einem einzigen Rad 4 auf dem ersten Untergrund 5.1 und zwei Rädern 4 auf dem zweiten Untergrund 5.2 durch ein angetriebenes Ansteuern sowohl des auf dem ersten Untergrund 5.1 verbliebenen einzigen Rades 4, das in Fig. 6 schraffiert dargestellt ist, und der beiden auf dem zweiten Untergrund 5.2 angetriebenen Räder 4, die in Fig. 6 schwarz dargestellt sind, mittels der Steuervorrichtung 3 in aufeinander abgestimmten Drehrichtungen und Drehgeschwindigkeiten dieser drei Räder 4, und zwar während des Erfassens der Drehrichtung und der Drehgeschwindigkeit des auf den zweiten Untergrund 5.2 aufgefahrenen Rades 4, das in Fig. 6 weiß dargestellt ist, während seines freien Drehens auf dem zweiten Untergrund 5.2. Für das in Fig. 6 weiß dargestellte Rad 4 erfolgt ein Erfassen der Drehrichtung und der Drehgeschwindigkeit während seines freien Drehens auf dem zweiten Untergrund 5.2. Dabei erfolgt ein Einregeln der Drehrichtung und der Drehgeschwindigkeit der anderen Räder 4 mittels der Steuervorrichtung 3 derart, dass das Omnidirektionalräder-Fahrzeug 1 seine derzeitige oder geplante Orientierung, Bewegungsrichtung, Bewegungsgeschwindigkeit und/oder Beschleunigung beibehält.

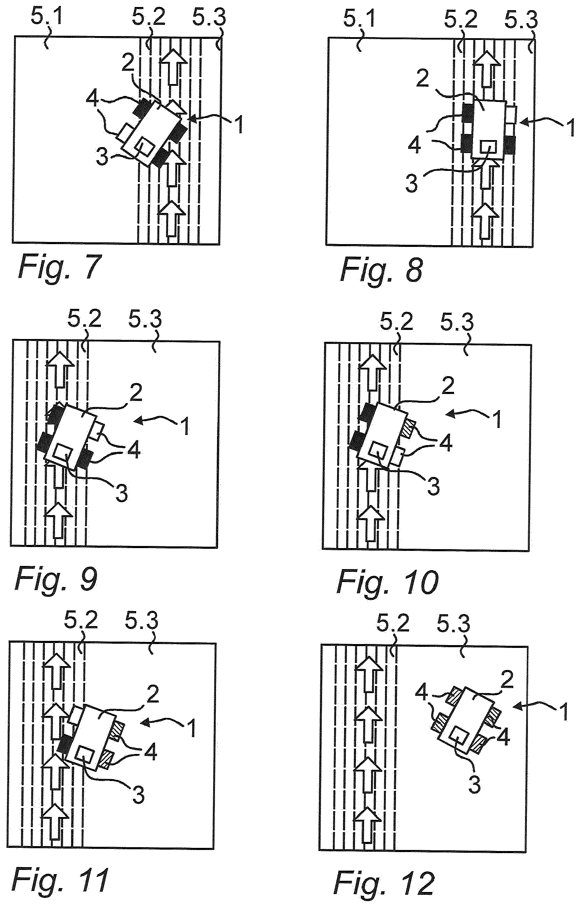

In Fig. 7 ist das Omnidirektionalräder-Fahrzeug 1 allein über die drei Räder 4, die sich auf dem zweiten Untergrund 5.2 befinden, und in Fig. 7 schwarz dargestellt sind, hinsichtlich seiner Position und Orientierung vollständig bestimmt. Das vierte Rad 4 kann daher antriebslos geschaltet werden. Wenn dieses vierte Rad 4 auf den zweiten Untergrund 5.2 gelangt ist, wie dies in Fig. 8 dargestellt ist, können nun wieder alle vier Räder 4 in gleicher Weise durch die Steuervorrichtung 3 angetrieben angesteuert werden. Der Systemzustand gemäß Fig. 8 unterscheidet sich dann steuerungstechnisch für das Ansteuern der vier Räder 4 durch die Steuervorrichtung 3 nicht von dem Systemzustand gemäß Fig.1.

Die Fig. 9 bis Fig. 12 stellt nun eine Sequenz dar, in der das Omnidirektionalräder-Fahrzeug 1 von dem bewegten zweiten Untergrund 5.2 auf einen im Falle des vorliegenden Ausführungsbeispiels ortsfesten, d.h. nicht in Bewegung befindlichen dritten Untergrund 5.3 herunterfährt. Hierzu wiederholt sich das grundsätzliche Verfahren mit dem einzigen Unterschied, dass die absoluten Bewegungsgeschwindigkeiten und Bewegungsrichtungen unterschiedlich sind. Im Grunde kann der dritte Untergrund 5.3 auch jede beliebige anderen Geschwindigkeit und/oder Bewegungsrichtung aufweisen.

Bei dem Verfahren gemäß Fig. 1 bis Fig. 8 ist demgemäß das Fahren des Omnidirektionalräder-Fahrzeugs 1 von dem ersten Untergrund 5.1 auf den zweiten Untergrund 5.2 ein Auffahren des Omnidirektionalräder-Fahrzeugs 1 von dem bezüglich der Umgebung ortsfesten ersten Untergrund 5.1 auf den bewegten zweiten Untergrund 5.2.

Bei dem Verfahren gemäß Fig. 9 bis Fig. 12 ist demgemäß das Fahren des Omnidirektionalräder-Fahrzeugs 1 von dem zweiten Untergrund auf den dritten Untergrund 5.3 ein Herunterfahren des Omnidirektionalräder-Fahrzeugs 1 von dem bezüglich der Umgebung bewegten zweiten Untergrund 5.2 auf einen ortsfesten dritten Untergrund 5.3.

Wenn das Omnidirektionalräder-Fahrzeug 1 auf den dritten Untergrund 5.3 herunterfährt, wie dies in Fig. 9 dargestellt ist, erfolgt zunächst ein Ansteuern aller vier Räder 4 mittels der Steuervorrichtung 3 derart, dass eines der vier Räder 4, also höchstens so viele Räder 4 auf den dritten Untergrund 5.5 herunterfahren, dass zumindest drei Räder 4 auf dem zweiten Untergrund 5.2 verbleiben. Bereits im Zustand der Fig. 8 erfolgt ein Abschalten des angesteuerten Antreibens des auf den dritten Untergrund 5.3 herunterzufahrenden Rades 4, derart, dass das auf den dritten Untergrund 5.3 herunterzufahrende Rad 4 sich derart frei drehen kann, dass es schon während des anschließenden Herunterfahrens und auch nach dem Herunterfahren eine Drehrichtung und Drehgeschwindigkeit annimmt, die sich aufgrund der relativen Bewegung des dritten Untergrunds 5.3 bezüglich des zweiten Untergrunds 5.2 in Abhängigkeit der Differenzgeschwindigkeit einstellt. Ein solches Abschalten des Antriebs ist in Fig.9 dadurch aufgezeigt, dass das betreffende Rad 4 unschraffiert, d.h. in weiß dargestellt ist.

Mittels des nicht angetriebenen, d.h. weiß dargestellten Rades 4 erfolgt ein Erfassen der Drehrichtung und der Drehgeschwindigkeit dieses auf den dritten Untergrund 5.3 aufgefahrenen Rades 4 während seines freien Drehens auf dem dritten Untergrund 5.3. Das frei drehende Rad 4 gemäß Fig. 9 wird durch den sich bewegenden zweiten Untergrund 5.2 und dem stillstehenden dritten Untergrund 5.3 entsprechend beschleunigt oder abgebremst, bis dieses Rad 4 eine Drehrichtung und Drehgeschwindigkeit angenommen hat, die der relativen Bewegung des dritten Untergrund 5.2 bezüglich des zweiten Untergrunds 5.2 entspricht. Die sich derart eingestellte Drehrichtung und Drehgeschwindigkeit dieses Rades 4 kann von der Steuervorrichtung 3 erfasst und ausgewertet werden. Das betreffende Rad bildet insoweit dann eine Messvorrichtung mittels der die Steuervorrichtung 3 die relative Bewegungsrichtung und die relative Bewegungsgeschwindigkeit des stellstehenden dritten Untergrunds 5.3 bezüglich des bewegten zweiten Untergrunds 5.2 feststellen kann. Die Steuervorrichtung 3 kann dann mittels der erfassten und/oder bestimmten Werte für Drehrichtung und Drehgeschwindigkeit des Rades 4 auch dieses Rad 4 angepasst angetrieben ansteuern, obwohl sich dieses eine Rad 4 auf einem anderen Untergrund, d.h. dem stillstehenden dritten Untergrund 5.3 befindet.

Das derart angepasst angetriebene Rad 4 auf dem dritten Untergrund 5.3 ist in Fig. 10 deshalb wieder schraffiert dargestellt. Dies bedeutet, dass dieses Rad sich nicht mehr in einem antriebslosen Zustand befindet, sondern unter gemäß dem stillstehenden dritten Untergrund 5.3 von der Steuervorrichtung 3 angetrieben angesteuert wird.

In Fig. 10 erfolgt somit ein Fahren des Omnidirektionalräder-Fahrzeugs 1 derart, dass sich drei Rädern 4 auf dem bewegten zweiten Untergrund 5.2 befinden und ein Rad 4 sich auf dem stillstehenden dritten Untergrund 5.3 befindet. Dabei erfolgt ein angetriebenes Ansteuern dreier Räder 4 mittels der Steuervorrichtung 3 in aufeinander abgestimmten Drehrichtungen und Drehgeschwindigkeiten, wobei zwei Räder (die beiden linken in Fig. 10) noch in Abstimmung auf den zweiten Untergrund 5.2 angetrieben sind, ein Rad (das rechte obere Rad in Fig. 10, das schraffiert dargestellt ist) in Abstimmung auf den dritten Untergrund 5.3 angetrieben ist und das vierte Rad (das rechte untere Rad in Fig. 10) noch auf dem zweiten Untergrund 5.2 befindlich antriebslos geschaltet ist, d.h. sich im abgeschalteten, nichtangetriebenen Zustand befindet.. In dem Zustand gemäß Fig. 10 erfolgt ein angetriebenes Fahren des Omnidirektionalräder-Fahrzeugs 1 demgemäß mit zwei Rädern 4 auf dem zweiten Untergrund 5.2 und einem einzigen Rad 4 auf dem dritten Untergrund 5.3 durch ein angetriebenes Ansteuern ausschließlich dieser drei Räder 4 mittels der Steuervorrichtung 3 in aufeinander abgestimmten Drehrichtungen und Drehgeschwindigkeiten dieser drei Räder 4.

In dem Zustand gemäß Fig. 11 erfolgt ein Fahren des Omnidirektionalräder-Fahrzeugs 1 mit lediglich einem einzigen Rad 4 auf dem sich bewegenden zweiten Untergrund 5.2 und zwei Rädern 4 auf dem stillstehenden dritten Untergrund 5.3 durch ein angetriebenes Ansteuern sowohl des auf dem zweiten Untergrund 5.2 verbliebenen einzigen Rades 4, das in Fig. 11 deshalb schwarz dargestellt ist, und der beiden auf dem stillstehenden dritten Untergrund 5.3 angetriebenen Räder 4, die in Fig. 11 deshalb schraffiert dargestellt sind, mittels der Steuervorrichtung 3 in aufeinander abgestimmten Drehrichtungen und Drehgeschwindigkeiten dieser drei Räder 4, und zwar während des Erfassens der Drehrichtung und der Drehgeschwindigkeit des auf den zweiten Untergrund 5.2 verbliebenen Rades 4, das in Fig. 11 weiß dargestellt ist, während seines freien Drehens auf dem zweiten Untergrund 5.2. Für das in Fig. 11 weiß dargestellte Rad 4 erfolgt ein Erfassen der Drehrichtung und der Drehgeschwindigkeit während seines freien Drehens auf dem zweiten Untergrund 5.2. Dabei erfolgt ein Einregeln der Drehrichtung und der Drehgeschwindigkeit der anderen Räder 4 mittels der Steuervorrichtung 3 derart, dass das Omnidirektionalräder-Fahrzeug 1 seine derzeitige oder geplante Orientierung, Bewegungsrichtung, Bewegungsgeschwindigkeit und/oder Beschleunigung beibehält.

Wenn alle vier Räder 4 sich am Ende der Sequenz auf dem dritten Untergrund 5.3 befinden, wie dies in Fig. 12 dargestellt ist, erfolgt ein automatisches Fahren des Omnidirektionalräder-Fahrzeugs 1 mittels der Steuervorrichtung 3 durch ein angetriebenes Ansteuern aller vier Räder 4 in aufeinander abgestimmten Drehrichtungen und Drehgeschwindigkeiten. Alle vier Räder fahren demgemäß bezüglich eines gemeinsamen Bezugsystems, nämlich dem dritten Untergrund 5.3. Diese Räder 4 sind in ihren angetriebenen Zuständen somit alle schraffiert dargestellt.

Während des gesamten Vorgangs von Fig. 1 zu Fig. 12 bringt die Steuervorrichtung 3 das Omnidirektionalräder-Fahrzeug 1 in eine Orientierung, in der zumindest das jeweils antriebslos geschaltete Rad 4 mit seiner Drehachse genau oder möglichst annähernd senkrecht zur relativen Bewegungsrichtung ausgerichtet ist, in die sich der zweite Untergrund 5.2 relativ zum ersten Untergrund 5.1 und zum dritten Untergrund 5.3 mit seiner Differenzgeschwindigkeit bewegt.

## Patentansprüche

1. Verfahren zum Betreiben eines Omnidirektionalräder-Fahrzeugs (1), das einen Fahrzeugkörper (2) aufweist, an dem wenigstens vier antreibbare, omnidirektionale Räder (4) drehbar gelagert sind, wobei jedes der wenigstens vier Räder (4) zum Fortbewegen des Omnidirektionalräder-Fahrzeugs (1) auf einem Untergrund (5.1, 5.2, 5.3) ausgebildet und durch eine Steuervorrichtung (3) individuell in ihren Drehrichtungen und Drehgeschwindigkeiten angesteuert sind, **gekennzeichnet durch** die folgenden Schritte:
- Fahren des Omnidirektionalräder-Fahrzeugs (1) mit allen der wenigstens vier Rädern (4) auf einem ersten Untergrund (5.1) durch Ansteuern aller der wenigstens vier Räder (4) mittels der Steuervorrichtung (3) in aufeinander abgestimmten Drehrichtungen und Drehgeschwindigkeiten aller wenigstens vier Räder (4), derart, dass sich das Omnidirektionalräder-Fahrzeug (1) einem zweiten Untergrund (5.2) annähern, welcher zweite Untergrund (5.2) sich relativ zum ersten Untergrund (5.1) mit einer Differenzgeschwindigkeit zum ersten Untergrund (5.1) bewegt,
- Abschalten des angesteuerten Antreibens mindestens eines der wenigstens vier Räder (4), jedoch höchstens so vieler Räder (4), dass zumindest drei der wenigstens vier Räder (4) auf dem ersten Untergrund (5.1) verbleiben, wobei das wenigstens eine abgeschaltete Rad (4) durch angesteuertes Antreiben der übrigen Räder (4) auf den zweiten Untergrund (5.2) aufgefahren wird,
- freies Drehen lassen des wenigstens einen auf den zweiten Untergrund (5.2) aufgefahrenen Rades (4), derart, dass es eine Drehrichtung und Drehgeschwindigkeit annimmt, die sich aufgrund der relativen Bewegung des zweiten Untergrunds (5.2) bezüglich des ersten Untergrunds (5.1) in Abhängigkeit der Differenzgeschwindigkeit einstellt,
- Erfassen der Drehrichtung und der Drehgeschwindigkeit des wenigstens einen auf den zweiten Untergrund (5.2) aufgefahrenen Rades (4) während seines freien Drehens auf dem zweiten Untergrund (5.2), und
- Fahren des Omnidirektionalräder-Fahrzeugs (1) mit den wenigstens vier Rädern (4) teilweise auf dem ersten Untergrund (5.1) und teilweise auf dem zweiten Untergrund (5.2) durch antreibbares Ansteuern aller der wenigstens vier Räder (4) mittels der Steuervorrichtung in aufeinander abgestimmten Drehrichtungen und Drehgeschwindigkeiten aller wenigstens vier Räder (4) in Abhängigkeit der während des freien Drehens im abgeschalteten, nichtangetriebenen Zustand erfassten Drehrichtung und Drehgeschwindigkeit des wenigstens einen auf den zweiten Untergrund (5.2) aufgefahrenen Rades (4).

2. Verfahren nach Anspruch 1, **gekennzeichnet durch** ein Erfassen der Orientierung des Omnidirektionalräder-Fahrzeugs (1) bezüglich der relativen Bewegungsrichtung von zweitem Untergrund (5.2) zu erstem Untergrund (5.1) und ein Fahren des Omnidirektionalräder-Fahrzeugs (1) mit den wenigstens vier Rädern (4) teilweise auf dem ersten Untergrund (5.1) und teilweise auf dem zweiten Untergrund (5.2) durch antreibbares Ansteuern aller der wenigstens vier Räder (4) mittels der Steuervorrichtung (3) in aufeinander abgestimmten Drehrichtungen und Drehgeschwindigkeiten aller wenigstens vier Räder (4) in Abhängigkeit der erfassten Orientierung des Omnidirektionalräder-Fahrzeugs (1) bezüglich der relativen Bewegungsrichtung von zweitem Untergrund (5.2) zu erstem Untergrund (5.1).

3. Verfahren nach Anspruch 1 oder 2, **dadurch gekennzeichnet, dass** während des abgeschalteten Zustands des angesteuerten Antreibens der auf den zweiten Untergrund (5.2) auffahrenden Räder (4), derart, dass die auf den zweiten Untergrund (5.2) auffahrenden Räder (4) sich derart frei drehen können, dass sie eine Drehrichtung und Drehgeschwindigkeit annehmen, die sich aufgrund der relativen Bewegung des zweiten Untergrunds (5.2) bezüglich des ersten Untergrunds (5.1) in Abhängigkeit der Differenzgeschwindigkeit einstellt, die auf den zweiten Untergrund (5.2) auffahrenden Räder (4) von der Steuervorrichtung (3) weder gebremst noch angetrieben werden.

4. Verfahren nach einem der Ansprüche 1 bis 3, **dadurch gekennzeichnet, dass** während des abgeschalteten Zustands des angesteuerten Antreibens der auf den zweiten Untergrund (5.2) auffahrenden Räder (4), derart, dass die auf den zweiten Untergrund (5.2) auffahrenden Räder (4) sich derart frei drehen können, dass sie eine Drehrichtung und Drehgeschwindigkeit annehmen, die sich aufgrund der relativen Bewegung des zweiten Untergrunds (5.2) bezüglich des ersten Untergrunds (5.1) in Abhängigkeit der Differenzgeschwindigkeit einstellt, ein Beschleunigen oder Verlangsamen der Drehungen der Räder (4) auf dem zweiten Untergrund (5.2) alleine durch die relative Bewegung des zweiten Untergrunds (5.2) zum ersten Untergrund (5.1) erfolgt, insbesondere ohne ein gesteuertes Antreiben oder Abbremsen durch die Steuervorrichtung (3) erfolgt.

5. Verfahren nach einem der Ansprüche 1 bis 4, **dadurch gekennzeichnet, dass** ein Fahren des Omnidirektionalräder-Fahrzeugs (1) mit den wenigstens vier Rädern (4) teilweise auf dem ersten Untergrund (5.1) und teilweise auf dem zweiten Untergrund (5.2) durch ein angetriebenes Ansteuern ausschließlich der auf dem ersten Untergrund (5.1) verbliebenen Räder (4) mittels der Steuervorrichtung (3) in aufeinander abgestimmten Drehrichtungen und Drehgeschwindigkeiten dieser verbliebenen Räder (4) erfolgt, insbesondere während des Erfassens der Drehrichtung und der Drehgeschwindigkeit des wenigstens einen auf den zweiten Untergrund (5.2) aufgefahrenen Rades (4) während seines freien Drehens auf dem zweiten Untergrund (5.2) .

6. Verfahren nach einem der Ansprüche 1 bis 5, **dadurch gekennzeichnet, dass** nach dem Erfassen der Drehrichtung und der Drehgeschwindigkeit des wenigstens einen auf den zweiten Untergrund (5.2) aufgefahrenen Rades (4) während seines freien Drehens auf dem zweiten Untergrund (5.2) ein Einregeln der Drehrichtung und der Drehgeschwindigkeit derjenigen Räder (4) auf dem zweiten Untergrund (5.2) mittels der Steuervorrichtung (3) derart erfolgt, dass das Omnidirektionalräder-Fahrzeug (1) seine derzeitige oder geplante Orientierung, Bewegungsrichtung, Bewegungsgeschwindigkeit und/oder Beschleunigung beibehält.

7. Verfahren nach einem der Ansprüche 1 bis 6, **dadurch gekennzeichnet, dass** das Fahren des Omnidirektionalräder-Fahrzeugs (1) von dem ersten Untergrund (5.1) auf den zweiten Untergrund (5.2) ein Auffahren des Omnidirektionalräder-Fahrzeugs (1) von einem bezüglich der Umgebung ortsfesten ersten Untergrund (5.1) auf einen bewegten zweiten Untergrund (5.2) ist.

8. Verfahren nach einem der Ansprüche 1 bis 7, **dadurch gekennzeichnet, dass** das Fahren des Omnidirektionalräder-Fahrzeugs (1) von dem ersten Untergrund (5.1) auf den zweiten Untergrund (5.2) ein Herunterfahren des Omnidirektionalräder-Fahrzeugs (1) von einem bezüglich der Umgebung bewegten ersten Untergrund (5.1) auf einen ortsfesten zweiten Untergrund (5.2) ist.

9. Verfahren nach einem der Ansprüche 1 bis 8, **dadurch gekennzeichnet, dass** das Fahren des Omnidirektionalräder-Fahrzeugs (1) gleichzeitig sowohl ein Auffahren des Omnidirektionalräder-Fahrzeugs (1) von einem bezüglich der Umgebung ortsfesten ersten Untergrund (5.1) auf einen bewegten zweiten Untergrund (5.2), als auch ein Herunterfahren des Omnidirektionalräder-Fahrzeugs (1) von einem bezüglich der Umgebung bewegten zweiten Untergrund (5.2) auf einen ortsfesten dritten Untergrund (5.3) umfasst.

10. Verfahren nach einem der Ansprüche 1 bis 9, **dadurch gekennzeichnet, dass** während eines Auffahren des Omnidirektionalräder-Fahrzeugs (1) von einem bezüglich der Umgebung ortsfesten ersten Untergrund (5.1) auf einen bewegten zweiten Untergrund (5.2), oder eines Herunterfahren des Omnidirektionalräder-Fahrzeugs (1) von einem bezüglich der Umgebung bewegten zweiten Untergrund (5.2) auf einen ortsfesten dritten Untergrund (5.3) entweder immer nur ein einzelnes Rad (4) zeitlich nach einem anderen Rad (4) in einen abgeschalteten Zustand gebracht wird oder mehrere Räder (4) in den abgeschalteten Zustand gebracht werden, wobei stets zumindest drei Räder (4) angetrieben bleiben und das jeweils abgeschaltete Rad (4) sich derart frei drehen kann, dass es nach einem Auffahren oder Herunterfahren eine Drehrichtung und Drehgeschwindigkeit annimmt, die sich aufgrund der relativen Bewegung des einen Untergrunds (5.1, 5.2, 5.3) bezüglich des anderen Untergrunds (5.1, 5.2, 5.3) in Abhängigkeit der Differenzgeschwindigkeit einstellt.

11. Verfahren nach einem der Ansprüche 1 bis 10, **dadurch gekennzeichnet, dass** die Steuervorrichtung (3) während eines Auffahren des Omnidirektionalräder-Fahrzeugs (1) von einem bezüglich der Umgebung ortsfesten ersten Untergrund (5.1) auf einen bewegten zweiten Untergrund (5.2), oder eines Herunterfahren des Omnidirektionalräder-Fahrzeugs (1) von einem bezüglich der Umgebung bewegten zweiten Untergrund (5.2) auf einen ortsfesten dritten Untergrund (5.3) die Orientierung des Omnidirektionalräder-Fahrzeugs (1) ändert.

12. Verfahren nach einem der Ansprüche 1 bis 11, **dadurch gekennzeichnet, dass** die Steuervorrichtung (3) das Omnidirektionalräder-Fahrzeug (1) während eines Auffahren von einem bezüglich der Umgebung ortsfesten ersten Untergrund (5.1) auf einen bewegten zweiten Untergrund (5.2), und/oder während eines Herunterfahren von einem bezüglich der Umgebung bewegten zweiten Untergrund (5.2) auf einen ortsfesten dritten Untergrund (5.3), in eine Orientierung bringt, in der das wenigstens eine antriebslos geschaltete Rad (4) mit seiner Drehachse genau oder möglichst annähernd senkrecht zur relativen Bewegungsrichtung ausgerichtet ist, in die sich der zweite Untergrund (5.2) relativ zum ersten Untergrund (5.1) oder dritten Untergrund (5.3) mit seiner Differenzgeschwindigkeit zum ersten Untergrund (5.1) oder dritten Untergrund (5.3) bewegt.

13. Omnidirektionalräder-Fahrzeug, aufweisend einen Fahrzeugkörper (2), wenigstens vier, an dem Fahrzeugkörper (2) drehbar gelagerte, antreibbare omnidirektionale Räder (4), wobei jedes der wenigstens vier Räder (4) zum Fortbewegen des Omnidirektionalräder-Fahrzeugs (1) auf einem Untergrund (5.1, 5.2, 5.3) ausgebildet sind, und eine Steuervorrichtung (3) zum individuellen Ansteuern der wenigstens vier Räder (4) in ihren Drehrichtungen und Drehgeschwindigkeiten, **dadurch gekennzeichnet, dass** die Steuervorrichtung (3) ausgebildet ist, ein Verfahren nach einem der Ansprüche 1 bis 12 auszuführen.

14. Computerprogrammprodukt aufweisend einen maschinenlesbaren Träger, auf dem Programmcode gespeichert ist, der von einer Fahrsteuervorrichtung (3) des Omnidirektional-räder-Fahrzeugs (1) gemäß Anspruch 13 auslesbar ist und der die Fahrsteuervorrichtung (3) des Omnidirektionalräder-Fahrzeugs (1) gemäß Anspruch 13 ausbildet und/oder einrichtet, ein Verfahren nach einem der Ansprüche 1 bis 12 durchzuführen, wenn der Programmcode von der Fahrsteuervorrichtung (3) des Omnidirektionalräder-Fahrzeugs (1) gemäß Anspruch 13 ausgeführt wird.

## Claims

1. Method for operating an omnidirectional-wheeled vehicle (1), which has a vehicle body (2), on which at least four drivable omnidirectional wheels (4) are rotatably mounted, each of the at least four wheels (4) being designed for advancing the omnidirectional-wheeled vehicle (1) on an underlying surface (5.1, 5.2, 5.3) and controlled individually in their directions of rotation and rotational speeds by a control device (3), **characterized by** the following steps:
- driving the omnidirectional-wheeled vehicle (1) with all of the at least four wheels (4) on a first underlying surface (5.1) by controlling all of the at least four wheels (4) by means of the control device (3) in directions of rotation and rotational speeds of all of the at least four wheels (4) that are coordinated with one another in such a way that the only directional-wheeled vehicle (1) approaches a second underlying surface (5.2), which second underlying surface (5.2) is moving in relation to the first underlying surface (5.1) at a differential speed with respect to the first underlying surface (5.1),
- switching off the controlled driving of at least one of the at least four wheels (4), but at most as many wheels (4) that at least three of the at least four wheels (4) remain on the first underlying surface (5.1), the at least one switched-off wheel (4) being moved onto the second underlying surface (5.2) by controlled driving of the other wheels (4),
- allowing the at least one wheel (4) that has been moved onto the second underlying surface (5.2) to rotate freely in such a way that it assumes a direction of rotation and a rotational speed that set themselves on the basis of the relative movement of the second underlying surface (5.2) with respect to the first underlying surface (5.1) in dependence on the differential speed,
- detecting the direction of rotation and the rotational speed of the at least one wheel (4) that has moved onto the second underlying surface (5.2) while it is freely rotating on the second underlying surface (5.2), and
- driving the omnidirectional-wheeled vehicle (1) with the at least four wheels (4) partly on the first underlying surface (5.1) and partly on the second underlying surface (5.2) by drivable control of all of the at least four wheels (4) by means of the control device in directions of rotation and at rotational speeds of all of the at least four wheels (4) that are coordinated with one another in dependence on the direction of rotation and rotational speed of the at least one wheel (4) that has moved onto the second underlying surface (5.2) detected while it is freely rotating in the switched-off, non-driven state.

2. Method according to Claim 1, **characterized by** detecting the orientation of the omnidirectional-wheeled vehicle (1) with respect to the relative direction of movement of the second underlying surface (5.2) in relation to the first underlying surface (5.1) and driving the omnidirectional-wheeled vehicle (1) with the at least four wheels (4) partly on the first underlying surface (5.1) and partly on the second underlying surface (5.2) by drivable control of all of the at least four wheels (4) by means of the control device (3) in the directions of rotation and rotational speeds of all of the at least four wheels (4) that are coordinated with one another in dependence on the detected orientation of the omnidirectional-wheeled vehicle (1) with respect to the relative movement of the second underlying surface (5.2) in relation to the first underlying surface (5.1).

3. Method according to Claim 1 or 2, **characterized in that**, during the switched-off state of the controlled driving of the wheels (4) that are being moved onto the second underlying surface (5.2) in such a way that the wheels (4) that are being moved onto the second underlying surface (5.2) can rotate freely in such a way that they assume a direction of rotation and a rotational speed that set themselves on the basis of the relative movement of the second underlying surface (5.2) with respect to the first underlying surface (5.1) in dependence on the differential speed, the wheels (4) that have been moved onto the second underlying surface (5.2) are neither braked nor driven by the control device (3).

4. Method according to one of Claims 1 to 3, **characterized in that**, during the switched-off state of the controlled driving of the wheels (4) that are being moved onto the second underlying surface (5.2) in such a way that the wheels (4) that are being moved onto the second underlying surface (5.2) can rotate freely in such a way that they assume a direction of rotation and a rotational speed that set themselves on the basis of the relative movement of the second underlying surface (5.2) with respect to the first underlying surface (5.1) in dependence on the differential speed, an acceleration or deceleration of the rotations of the wheels (4) on the second underlying surface (5.2) takes place solely due to the relative movement of the second underlying surface (5.2) in relation to the first underlying surface (5.1), in particular without controlled driving or braking by the control device (3) taking place.

5. Method according to one of Claims 1 to 4, **characterized in that** driving the omnidirectional-wheeled vehicle (1) with the at least four wheels (4) partly on the first underlying surface (5.1) and partly on the second underlying surface (5.2) takes place by driven control just of the wheels (4) remaining on the first underlying surface (5.1) by means of the control device (3) in directions of rotation and at rotational speeds of these remaining wheels (4) that are coordinated with one another, in particular during the detection of the direction of rotation and the rotational speed of the at least one wheel (4) that has moved onto the second underlying surface (5.2) while it is freely rotating on the second underlying surface (5.2).

6. Method according to one of Claims 1 to 5, **characterized in that**, after the detection of the direction of rotation and the rotational speed of the at least one wheel (4) that has moved onto the second underlying surface (5.2) while it is freely rotating on the second underlying surface (5.2), an adjustment of the direction of rotation and the rotational speed of those wheels (4) that are on the second underlying surface (5.2) takes place by means of the control device (3) in such a way that the omnidirectional-wheeled vehicle (1) maintains its current or planned orientation, direction of movement, speed of movement and/or acceleration.

7. Method according to one of Claims 1 to 6, **characterized in that** driving the omnidirectional-wheeled vehicle (1) from the first underlying surface (5.1) onto the second underlying surface (5.2) entails moving the omnidirectional-wheeled vehicle (1) from a first underlying surface (5.1) that is stationary with respect to the surroundings onto a second underlying surface (5.2) that is being moved.

8. Method according to one of Claims 1 to 7, **characterized in that** driving the omnidirectional-wheeled vehicle (1) from the first underlying surface (5.1) onto the second underlying surface (5.2) entails moving the omnidirectional-wheeled vehicle (1) off from the first underlying surface (5.1) that is being moved with respect to the surroundings onto a second underlying surface (5.2) that is stationary.

9. Method according to one of Claims 1 to 8, **characterized in that** driving the omnidirectional-wheeled vehicle (1) comprises both driving the omnidirectional-wheeled vehicle (1) from a first underlying surface (5.1) that is stationary with respect to the surroundings onto a second underlying surface (5.2) that is being moved and at the same time moving the omnidirectional-wheeled vehicle (1) off from a second underlying surface (5.2) that is being moved with respect to the surroundings onto a third underlying surface (5.3) that is stationary.

10. Method according to one of Claims 1 to 9, **characterized in that**, during the moving of the omnidirectional-wheeled vehicle (1) from a first underlying surface (5.1) that is stationary with respect to the surroundings onto a second underlying surface (5.2) that is being moved, or moving the omnidirectional-wheeled vehicle (1) off from a second underlying surface (5.2) that is being moved with respect to the surroundings onto a third underlying surface (5.3) that is stationary, either the wheels (4) are only brought into a switched-off state one at a time, one wheel (4) after the other, or a number of wheels (4) are brought into the switched-off state, with at least three wheels (4) remaining driven at all times and the respectively switched-off wheel (4) being able to rotate freely in such a way that, after moving on or moving off, it assumes a direction of rotation and a rotational speed that set themselves on the basis of the relative movement of the one underlying surface (5.1, 5.2, 5.3) with respect to the other underlying surface (5.1, 5.2, 5.3) in dependence on the differential speed.

11. Method according to one of Claims 1 to 10, **characterized in that**, while moving the omnidirectional-wheeled vehicle (1) from a first underlying surface (5.1) that is stationary with respect to the surroundings onto a second underlying surface (5.2) that is being moved, or moving the omnidirectional-wheeled vehicle (1) off from a second underlying surface (5.2) that is being moved with respect to the surroundings onto a third underlying surface (5.3) that is stationary, the control device (3) changes the orientation of the omnidirectional-wheeled vehicle (1).

12. Method according to one of Claims 1 to 11, **characterized in that**, while moving it from a first underlying surface (5.1) that is stationary with respect to the surroundings onto a second underlying surface (5.2) that is being moved, and/or while moving it off from a second underlying surface (5.2) that is being moved with respect to the surroundings onto a third underlying surface (5.3) that is stationary, the control device (3) brings the omnidirectional-wheeled vehicle (1) into an orientation in which the at least one driveless-switched wheel (4) is aligned with its axis of rotation precisely, or as closely as possible, perpendicular to the relative direction of movement in which the second underlying surface (5.2) is moving in relation to the first underlying surface (5.1) or the third underlying surface (5.3) with its differential speed with respect to the first underlying surface (5.1) or the third underlying surface (5.3).

13. Omnibus-wheeled vehicle, having a vehicle body (2), at least four drivable omnidirectional wheels (4) rotatably mounted on the vehicle body (2), each of the at least four wheels (4) being designed for advancing the omnidirectional-wheeled vehicle (1) on an underlying surface (5.1, 5.2, 5.3), and a control device (3) for controlling the at least four wheels (4) individually in their directions of rotation and rotational speeds, **characterized in that** the control device (3) is designed to perform a method according to one of Claims 1 to 12.

14. Computer program product having a machine-readable carrier, stored on which is program code, which can be read by a driving control device (3) of the omnidirectional-wheeled vehicle (1) according to Claim 13 and which designs and/or sets up the driving control device (3) of the omnidirectional-wheeled vehicle (1) according to Claim 13 to carry out a method according to one of Claims 1 to 12 when the program code is executed by the driving control device (3) of the omnidirectional-wheeled vehicle (1) according to Claim 13.

## Revendications

1. Procédé pour faire fonctionner un véhicule à roues omnidirectionnelles (1) qui présente un corps de véhicule (2) sur lequel au moins quatre roues omnidirectionnelles (4) pouvant être entraînées sont montées à rotation, chacune des au moins quatre roues (4) étant réalisée pour le mouvement du véhicule à roues omnidirectionnelles (1) sur une surface sous-jacente (5.1, 5.2, 5.3) et étant commandée individuellement par un dispositif de commande (3) en ce qui concerne son sens de rotation et sa vitesse de rotation, **caractérisé par** les étapes suivantes :
- conduire le véhicule à roues omnidirectionnelles (1) avec toutes les au moins quatre roues (4) sur une première surface sous-jacente (5.1) par commande de toutes les au moins quatre roues (4) au moyen du dispositif de commande (3) dans des sens de rotation et des vitesses de rotation, adaptés les uns aux autres, de toutes les au moins quatre roues (4), de telle sorte que le véhicule à roues omnidirectionnelles (1) se rapproche d'une deuxième surface sous-jacente (5.2), laquelle deuxième surface sous-jacente (5.2) se déplace par rapport à la première surface sous-jacente (5.1) avec une vitesse différentielle par rapport à la première surface sous-jacente (5.1),
- désactiver l'entraînement commandé d'au moins l'une des au moins quatre roues (4), cependant au maximum de tant de roues (4) qu'au moins trois des au moins quatre roues (4) demeurent sur la première surface sous-jacente (5.1), l'au moins une roue désactivée (4) étant amenée à monter sur la deuxième surface sous-jacente (5.2) par entraînement commandé des roues restantes (4),
- laisser tourner librement l'au moins une roue (4) amenée à monter sur la deuxième surface sous-jacente (5.2) de telle sorte qu'elle adopte un sens de rotation et une vitesse de rotation se produisant en raison du déplacement relatif de la deuxième surface sous-jacente (5.2) par rapport à la première surface sous-jacente (5.1) en fonction de la vitesse différentielle,
- détecter le sens de rotation et la vitesse de rotation de l'au moins une roue (4) amenée à monter sur la deuxième surface sous-jacente (5.2) pendant sa rotation libre sur la deuxième surface sous-jacente (5.2), et
- conduire le véhicule à roues omnidirectionnelles (1) avec les au moins quatre roues (4) partiellement sur la première surface sous-jacente (5.1) et partiellement sur la deuxième surface sous-jacente (5.2) par commande pouvant être entraînée de toutes les au moins quatre roues (4) au moyen du dispositif de commande dans des sens de rotation et des vitesses de rotation, adaptés les uns aux autres, de toutes les au moins quatre roues (4), en fonction du sens de rotation et de la vitesse de rotation, détectés pendant la rotation libre dans l'état désactivé, non entraîné, de l'au moins une roue (4) amenée à monter sur la deuxième surface sous-jacente (5.2) .

2. Procédé selon la revendication 1, **caractérisé par** une détection de l'orientation du véhicule à roues omnidirectionnelles (1) par rapport au sens de déplacement relatif de la deuxième surface sous-jacente (5.2) par rapport à la première surface sous-jacente (5.1) et une conduite du véhicule à roues omnidirectionnelles (1) avec les au moins quatre roues (4) partiellement sur la première surface sous-jacente (5.1) et partiellement sur la deuxième surface sous-jacente (5.2) par commande pouvant être entraînée de toutes les au moins quatre roues (4) au moyen du dispositif de commande (3) dans des sens de rotation et des vitesses de rotation, adaptés les uns aux autres, de toutes les au moins quatre roues (4), en fonction de l'orientation détectée du véhicule à roues omnidirectionnelles (1) par rapport au sens de déplacement relatif de la deuxième surface sous-jacente (5.2) par rapport à la première surface sous-jacente (5.1).

3. Procédé selon la revendication 1 ou 2, **caractérisé en ce que** pendant l'état désactivé de l'entraînement commandé des roues (4) montant sur la deuxième surface sous-jacente (5.2), de telle sorte que les roues (4) montant sur la deuxième surface sous-jacente (5.2) puissent tourner librement, de telle sorte qu'elles adoptent un sens de rotation et une vitesse de rotation se produisant en raison du déplacement relatif de la deuxième surface sous-jacente (5.2) par rapport à la première surface sous-jacente (5.1) en fonction de la vitesse différentielle, les roues (4) montant sur la deuxième surface sous-jacente (5.2) ne sont ni freinées ni entraînées par le dispositif de commande (3).

4. Procédé selon l'une des revendications 1 à 3, **caractérisé en ce que** pendant l'état désactivé de l'entraînement commandé des roues (4) montant sur la deuxième surface sous-jacente (5.2), de telle sorte que les roues (4) montant sur la deuxième surface sous-jacente (5.2) puissent tourner librement, de telle sorte qu'elles adoptent un sens de rotation et une vitesse de rotation se produisant en raison du déplacement relatif de la deuxième surface sous-jacente (5.2) par rapport à la première surface sous-jacente (5.1) en fonction de la vitesse différentielle, une accélération ou un ralentissement des rotations des roues (4) sur la deuxième surface sous-jacente (5.2) s'effectue uniquement par le déplacement relatif de la deuxième surface sous-jacente (5.2) par rapport à la première surface sous-jacente (5.1), en particulier sans un entraînement ou un freinage commandé par le dispositif de commande (3).

5. Procédé selon l'une des revendications 1 à 4, **caractérisé en ce qu'**une conduite du véhicule à roues omnidirectionnelles (1) avec les au moins quatre roues (4) partiellement sur la première surface sous-jacente (5.1) et partiellement sur la deuxième surface sous-jacente (5.2) s'effectue par une commande entraînée exclusivement des roues (4) demeurant sur la première surface sous-jacente (5.1) au moyen du dispositif de commande (3) dans des sens de rotation et des vitesses de rotation, adaptés les uns aux autres, de ces roues restantes (4), en particulier pendant la détection du sens de rotation et de la vitesse de rotation de l'au moins une roue (4) amenée à monter sur la deuxième surface sous-jacente (5.2) pendant sa rotation libre sur la deuxième surface sous-jacente (5.2).

6. Procédé selon l'une des revendications 1 à 5, **caractérisé en ce qu'**après la détection du sens de rotation et de la vitesse de rotation de l'au moins une roue (4) amenée à monter sur la deuxième surface sous-jacente (5.2) pendant sa rotation libre sur la deuxième surface sous-jacente (5.2), un réglage du sens de rotation et de la vitesse de rotation de ces roues (4) sur la deuxième surface sous-jacente (5.2) au moyen du dispositif de commande (3) s'effectue de telle sorte que le véhicule à roues omnidirectionnelles (1) maintienne son orientation, son sens de déplacement, sa vitesse de déplacement et/ou son accélération actuels ou prévus.

7. Procédé selon l'une des revendications 1 à 6, **caractérisé en ce que** la conduite du véhicule à roues omnidirectionnelles (1) de la première surface sous-jacente (5.1) à la deuxième surface sous-jacente (5.2) est une montée du véhicule à roues omnidirectionnelles (1) d'une première surface sous-jacente (5.1) fixe par rapport à l'environnement à une deuxième surface sous-jacente (5.2) déplacée.

8. Procédé selon l'une des revendications 1 à 7, **caractérisé en ce que** la conduite du véhicule à roues omnidirectionnelles (1) de la première surface sous-jacente (5.1) à la deuxième surface sous-jacente (5.2) est une descente du véhicule à roues omnidirectionnelles (1) d'une première surface sous-jacente (5.1) déplacée par rapport à l'environnement à une deuxième surface sous-jacente (5.2) fixe.

9. Procédé selon l'une des revendications 1 à 8, **caractérisé en ce que** la conduite du véhicule à roues omnidirectionnelles (1) comporte en même temps une montée du véhicule à roues omnidirectionnelles (1) d'une première surface sous-jacente (5.1) fixe par rapport à l'environnement à une deuxième surface sous-jacente (5.2) déplacée, et une descente du véhicule à roues omnidirectionnelles (1) d'une deuxième surface sous-jacente (5.2) déplacée par rapport à l'environnement à une troisième surface sous-jacente (5.3) fixe.

10. Procédé selon l'une des revendications 1 à 9, **caractérisé en ce que** pendant une montée du véhicule à roues omnidirectionnelles (1) d'une première surface sous-jacente (5.1) fixe par rapport à l'environnement à une deuxième surface sous-jacente (5.2) déplacée, ou une descente du véhicule à roues omnidirectionnelles (1) d'une deuxième surface sous-jacente (5.2) déplacée par rapport à l'environnement à une troisième surface sous-jacente (5.3) fixe, soit seulement toujours une roue individuelle (4) est amenée à un état désactivé après une autre roue (4) dans le temps ou plusieurs roues (4) sont amenées à l'état désactivé, au moins trois roues (4) restant constamment entraînées et la roue (4) respectivement désactivée pouvant tourner librement, de telle sorte qu'elle adopte après une montée ou une descente un sens de rotation et une vitesse de rotation se produisant en raison du déplacement relatif de l'une des surfaces sous-jacentes (5.1, 5.2, 5.3) par rapport à l'autre surface sous-jacente (5.1, 5.2, 5.3) en fonction de la vitesse différentielle.

11. Procédé selon l'une des revendications 1 à 10, **caractérisé en ce que** le dispositif de commande (3) modifie l'orientation du véhicule à roues omnidirectionnelles (1) pendant une montée du véhicule à roues omnidirectionnelles (1) d'une première surface sous-jacente (5.1) fixe par rapport à l'environnement à une deuxième surface sous-jacente (5.2) déplacée, ou une descente du véhicule à roues omnidirectionnelles (1) d'une deuxième surface sous-jacente (5.2) déplacée par rapport à l'environnement à une troisième surface sous-jacente (5.3) fixe.

12. Procédé selon l'une des revendications 1 à 11, **caractérisé en ce que** le dispositif de commande (3) amène le véhicule à roues omnidirectionnelles dans une orientation (1) pendant une montée d'une première surface sous-jacente (5.1) fixe par rapport à l'environnement à une deuxième surface sous-jacente (5.2) déplacée et/ou pendant une descente d'une deuxième surface sous-jacente (5.2) déplacée par rapport à l'environnement à une troisième surface sous-jacente (5.3) fixe, orientation dans laquelle l'au moins une roue (4) activée sans entraînement est orientée de telle sorte que son axe de rotation soit exactement ou autant que possible approximativement perpendiculaire au sens de déplacement relatif dans lequel la deuxième surface sous-jacente (5.2) se déplace par rapport à la première surface sous-jacente (5.1) ou la troisième surface sous-jacente (5.3) avec sa vitesse différentielle par rapport à la première surface sous-jacente (5.1) ou la troisième surface sous-jacente (5.3) .

13. Véhicule à roues omnidirectionnelles, présentant un corps de véhicule (2), au moins quatre roues omnidirectionnelle (4) pouvant être entraînées, montées à rotation sur le corps de véhicule (2), chacune des au moins quatre roues (4) étant réalisée pour le mouvement du véhicule à roues omnidirectionnelles (1) sur une surface sous-jacente (5.1, 5.2, 5.3), et un dispositif de commande (3) pour commander individuellement les au moins quatre roues (4) en ce qui concerne leurs sens de rotation et leurs vitesses de rotation, **caractérisé en ce que** le dispositif de commande (3) est réalisé pour mettre en œuvre procédé selon l'une des revendications 1 à 12.

14. Produit de programme informatique présentant un support lisible par machine, sur lequel un code de programme est enregistré, lequel peut être lu par un dispositif de commande de conduite (3) du véhicule à roues omnidirectionnelles (1) selon la revendication 13 et lequel réalise et/ou règle le dispositif de commande conduite (3) du véhicule à roues omnidirectionnelles (1) selon la revendication 13 pour mettre en œuvre un procédé selon l'une des revendications 1 à 12 lorsque le code de programme est exécuté par le dispositif de commande conduite (3) du véhicule à roues omnidirectionnelles (1) selon la revendication 13.
